# EUROPEAN PATENT SPECIFICATION

(11) **EP 1 503 132 B1**
(45) Date of publication and mention of the grant of the patent: **13.06.2007**
(21) Application number: 03017291.0
(22) Date of filing: 30.07.2003
(51) Int. Cl.: F16L 55/027

(54) **Damping device for hydraulic circuits**
Dämpfvorrichtung für Hydraulikkreisläufe
Dispositif d'amortissement pour circuits hydrauliques

(43) Date of publication of application: 02.02.2005
(73) Proprietor: Siemens VDO Automotive S.p.A., 56040 Fauglia (Pisa) (IT)
(72) Inventor: Baccini, Claudio, 56020 La Rotta (IT); Mouton, Diego, 57128 Livorno (IT)
(74) Representative: Berg, Peter

(56) References cited:
- DE-C- 617 502
- DE-U- 8 806 731
- GB-A- 2 333 166
- US-A- 2 893 432

## Description

The invention relates to a damping device for hydraulic circuits, particularly for fuel lines of engine injection systems.

In the state of the art, damping devices are well-known for minimizing pressure waves in hydraulic circuits comprising a chamber with a flexible membrane. The flexible membrane damps pressure waves by means of its flexibility. The known damping devices, however, are not dedicated to reduce noise that is generated by the pressure waves.

DE 88 06 731 U discloses a device for damping pressure waves in a fluid pressure line. The device comprises an inlet chamber, a pressure chamber and an outlet chamber that are arranged in one line and are formed by tube sections isolated from each other by bendable wall sections. The tube sections are coaxially arranged inside a tube so that there is a clearance between the inner face of the tube and the outer faces of the tube sections forming a ring chamber. The inlet chamber and the outlet chamber are connected with the ring chamber by throttling passages. End caps are arranged to close the inlet, the outlet and the ring chamber in axial direction and provide an inlet to the inlet chamber and an outlet from the outlet chamber.

It is an object of the invention to provide a damping device that is easy and cheap to produce.

The object of the invention is attained by a damping device according to claim 1. Further advantageous embodiments of the invention are described in the dependent claims.

The damping device according to claim 1 has a cylindrical body, that is formed as one piece, in which the inlet and the outlet chamber are arranged along the middle axis and the inter-chamber is arranged as a circular groove or recess on the outer face of the cylindrical body. In this embodiment the inter-chamber is sealed up by a chamber wall or a line wall into which the cylindrical chamber is introduced. This embodiment has the advantage that it is simple to produce since the inter-chamber can easily be machined into the cylindrical body and the first and second channels can also easily be drilled starting from the freely accessible inter-chamber. This device has the advantage that its construction is simple and also effectively damps the noise within a hydraulic circuit.

In a preferred embodiment of the invention, an inlet chamber and an outlet chamber are arranged in one line, which has the advantage that the diameter of the damping device is relatively small.

In a further preferred embodiment of the invention, the inter-chamber has the shape of a hollow ring which has the advantage that the volume of the inter-chamber is relatively large although the damping device is of small size.

In a further preferred embodiment of the invention, several first and/or second channels are arranged between the inter-chamber and the inlet or the outlet chamber, respectively. This embodiment increases the damping effect of the device without increasing the size of the damping device.

In a preferred embodiment of the invention the inter-chamber is arranged next to the inlet and the outlet chamber. This construction has the advantage that the length of the dampening device is relatively small.

In a preferred embodiment of the invention several first and second channels are arranged in different planes that are arranged perpendicularly to a longitudinal axis of the damping device. This embodiment provides the possibility to arrange a lot of first and second channels, whereby the damping effect of the damping device increases with the number of first and second channels that are used.

The invention is explained in detail with reference to the Figures.
Figure 1 depicts a schematic view of the damping device.
Figure 2 depicts a plane with several channels.

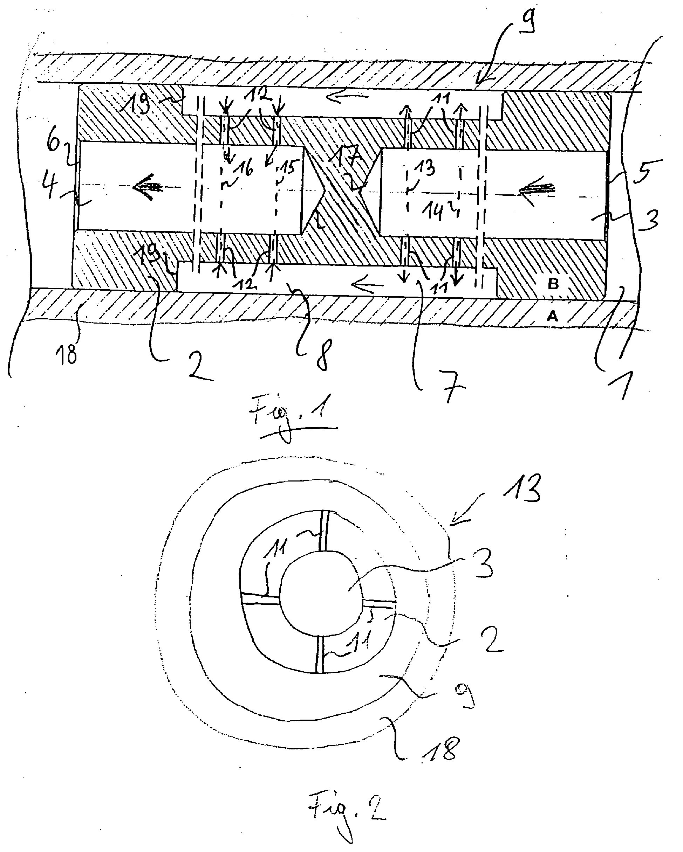

Figure 1 shows a cross-section of a chamber 1 that has a cylindrical shape. The chamber 1 can be arranged within an injection valve or a pressure pump or in any other system of a hydraulic circuit. In a preferred embodiment, the chamber 1 is constituted by a fuel line 18, for example a fuel line between a common rail accumulator and an injection valve.

Within the chamber 1, a cylindrical body 2 is arranged that is press-fit into the chamber 1. The cylindrical body 2 comprises an inlet chamber 3 and an outlet chamber 4. The inlet chamber 3 and the outlet chamber 4 basically show a cylindrical shape and are arranged with their middle axes within the middle axis of the body 2. The inlet chamber 3 and the outlet chamber 4 are connected via openings 5, 6 to the chamber 1. The inlet chamber 3 and the outlet chamber 4 are arranged at opposite sides of the body 2 and are connected to opposite parts of chamber 1.

At an outer face, the cylindrical body 2 comprises a circular groove 7 that is adjacent to a face 8 of chamber 1. The groove 7 and the face 8 constitute an inter-chamber 9. Depending on the embodiment of the invention, the inter-chamber 9 may be constituted in different shapes, for example as a chamber within the body 2.

In the shown embodiment of the invention, the inlet chamber 3 and the outlet chamber 4 extend into a middle part of the body 2 that is circumvented by the inter-chamber 9. In a preferred embodiment of the invention, the closed endings of the inlet and the outlet chamber 3, 4 are arranged at a small distance. Near the closed ending of the inlet chamber, first channels 11 are arranged in the body 2, connecting the inlet chamber 3 with the inter-chamber 9. In a simple embodiment only one first channel 11 is present. In a preferred embodiment, several first channels 11 are present that are arranged within one plane that is perpendicular to the middle axis of the body 2. Due to the circular shape of the wall of the inlet chamber 3, the first channels 11 are advantageously arranged at equal angles to each other.

Figure 2 shows a schematic view of first channels 11 that are arranged in a first plane 13. In the preferred embodiment of the invention as shown in Figure 1, first channels 11 are arranged in the first plane 13 and in a second plane 14 that is depicted in Figure 1.

Next to the closed ending of the outlet chamber 4, second channels 12 are arranged within the body 2. In a simple embodiment of the invention, there is only one second channel 12 that connects the outlet chamber 4 to the inter-chamber 9. In the preferred embodiment of the invention, there are several second channels 12 that connect the outlet chamber 4 to the inter-chamber 9. Preferably, several second channels 12 are arranged within a third plane 15. The second channels 12 of the third plane 15 are arranged in a radial direction to the middle axis of the body 2. The second channels 12 of the third plane 15 are arranged at equal angles as the first channels 11 of the first and second planes 13, 14. Furthermore, a fourth plane 16 is present comprising several second channels 12 that are disposed in the same shape as the second channels 12 of the third plane 15, as it is shown in Figure 2 for the first channels 11 of the first plane 13.

The function of the damping device is explained in the following:

The movement of a pressure wave is depicted by means of arrows. If there is a pressure wave moving to the inlet chamber 3, the pressure wave passes through the first channels 11 to the inter-chamber 9. From the inter-chamber 9, the pressure wave moves to the left side to the second channels 12 that are disposed at a given distance from the first channels 11. Then the pressure wave passes the second channels 12 to the outlet chamber 4. From the outlet chamber 4, the pressure wave passes to the left part of the chamber 1.

The advantageous effect is increased by the orientation of the first channel 11 at a given angle to the longitudinal axis of the inlet chamber 3. In the shown embodiment, the angle between the longitudinal axis of the inlet chamber 3 and the first channels 11 is 90°. Depending on the embodiment, it could be a smaller or a greater angle between the longitudinal axis of the inlet chamber 3 and the longitudinal axis of the first channels 11. The pressure wave moving in the inlet chamber 3 pushes to a first end face 17 of the closed end of the inlet chamber 3. The first end face 17 preferably comprises a conical shape that has a damping effect. The first channels 11 have a smaller diameter than the inlet chamber 3 and the inter-chamber 9, therefore the speed and the pressure of the pressure wave is reduced by passing through the first channels 11. In the inter-chamber 9 the pressure wave pushes against the face 8 of the fuel line 20 and has to move on in a direction that is arranged at a given angle to the direction of the first channels 11. In this embodiment, the direction is 90° and therefore the pressure of the pressure wave is also reduced. At the left end of the inter-chamber 9, the pressure wave pushes against a second end face 19 of the inter-chamber 9, although at this point the pressure wave has to change its direction by 90° and pass through the second channels 12. The diameter of the second channels 12 is smaller than the diameter of the inter-chamber 9, although this reduces the speed and the pressure of the pressure wave. In the inlet chamber 3, the pressure wave again has to change its direction to the second opening 6 of the outlet chamber 4, although this reduces the speed and the pressure of the pressure wave.

Furthermore, the pressure and the speed are reduced due to the orientation of the second channels 12 whereby two second channels 12 are arranged at opposite sides of the outlet chamber 4. Using the damping device, the noise of a pressure wave attaining the inlet chamber 3 is damped until it arrives at the second opening 6 of the outlet chamber 4.

## Claims

1. Device for damping noise in a hydraulic circuit, particularly in a fuel line (18), comprising an inlet chamber (3) that is connected to an inter-chamber (9) by a first channel (11), whereby the inter-chamber (9) is located beside the inlet chamber (3) whereby the inter-chamber (9) is connected downstream by a second channel (12) to an outlet chamber (4) that is arranged beside the inter-chamber (9), whereby the diameters of the inlet and outlet chamber (3, 4) are larger than the diameter of the first and the second channels (11, 12),
**characterized in that**
the device comprises a body (2), that is formed as one piece, in which the inlet and outlet chamber (3, 4) are arranged, wherein the body (2) comprises a circular groove (7) on an outer face, wherein the groove is connected by the first and second channels (11, 12) to the inlet and the outlet hamber (3 4), when in use the body (2) is fixed in a chamber (1) of a hydraulic circuit (18) and the circular groove (7) is adjacent to a face of said chamber (1) constituting a wall of an inter-chamber (9).

2. Device according to claim 1, **characterized in that**
the inlet and outlet chamber (3, 4) are arranged in one line.

3. Device according to claim 1 or 2, **characterized in that**
the inter-chamber (9) has the shape of a circular ring.

4. Device according to claims 1 to 3, **characterized in that** several first and/or second channels (11, 12) are arranged.

5. Device according to claim 4, **characterized in that**
the several first and/or second channels are arranged in planes (13, 114, 15, 16) that are perpendicularly disposed to the middle axis of the inlet or outlet chamber (3, 4).

6. Device according to claim 5, **characterized in that**
the first and/or second channels (11, 12) are arranged with fixed angles to each other equally disposed on a circle.

7. Device according to claim 5, **characterized in that**
the first and/or the second channels (11, 12) are arranged in different planes that are arranged in parallel to each other.

## Patentansprüche

1. Vorrichtung zur Geräuschdämpfung in einem Hydraulikkreis, insbesondere in einer Kraftstoffleitung (18), mit einer Einlasskammer (3), die über einen ersten Kanal (11) mit einer Zwischenkammer (9) verbunden ist, wobei die Zwischenkammer (9) neben der Einlasskammer (3) angeordnet und abstromseitig über einen zweiten Kanal (12) mit einer Auslasskammer (4) verbunden ist, die neben der Zwischenkammer (9) angeordnet ist, und wobei die Durchmesser der Einlass- und Auslasskammer (3, 4) größer sind als die Durchmesser des ersten und zweiten Kanals (11, 12), **dadurch gekennzeichnet, dass** die Vorrichtung einen Körper (2) aufweist, der einstückig ausgebildet ist, in dem die Einlass- und Auslasskammer (3, 4) angeordnet sind und der eine kreisförmige Nut (7) auf einer Außenfläche aufweist, wobei die Nut über den ersten und zweiten Kanal (11, 12) mit der Einlass- und Auslasskammer (3, 4) verbunden ist und wobei im Betrieb der Körper (2) in einer Kammer (1) eines Hydraulikkreises (18) befestigt ist und sich die kreisförmige Nut (7) benachbart zu einer Fläche der Kammer (1) befindet, die eine Wand einer Zwischenkammer (9) bildet.

2. Vorrichtung nach Anspruch 1, **dadurch gekennzeichnet, dass** die Einlass- und Auslasskammer (3, 4) in einer Linie angeordnet sind.

3. Vorrichtung nach Anspruch 2, **dadurch gekennzeichnet, dass** die Zwischenkammer (9) die Form eines Kreisringes besitzt.

4. Vorrichtung nach den Ansprüchen 1-3, **dadurch gekennzeichnet, dass** diverse erste und/oder zweite Kanäle (11, 12) angeordnet sind.

5. Vorrichtung nach Anspruch 4, **dadurch gekennzeichnet, dass** die diversen ersten und/oder zweiten Kanäle in Ebenen (13, 14, 15, 16) angeordnet sind, die senkrecht zur Mittelachse der Einlass- oder Auslasskammer (3, 4) angeordnet sind.

6. Vorrichtung nach Anspruch 5, **dadurch gekennzeichnet, dass** die ersten und/oder zweiten Kanäle (11, 12) unter festen Winkeln relativ zueinander in gleichen Abständen auf einem Kreis angeordnet sind.

7. Vorrichtung nach Anspruch 5, **dadurch gekennzeichnet, dass** die ersten und/oder zweiten Kanäle (11, 12) in verschiedenen Ebenen, die parallel zueinander anordnet sind, vorgesehen sind.

## Revendications

1. Dispositif d'amortissement de bruit dans un circuit hydraulique, en particulier dans une conduite de carburant (18), comprenant une chambre d'entrée (3) qui est reliée à un espace inter-chambres (9) par un premier canal (11), grâce à quoi l'espace inter-chambres (9) est situé à côté de la chambre d'entrée (3), grâce à quoi l'espace inter-chambres (9) est relié en aval par un second canal (12) à une chambre de sortie (4) qui est disposée à côté de l'espace inter-chambres (9), grâce à quoi les diamètres des chambres d'entrée et de sortie (3, 4) sont plus importants que le diamètre des premier et second canaux (11, 12),
**caractérisé en ce que**
le dispositif comprend un corps (2), qui est formé d'une seule pièce, dans lequel les chambres d'entrée et de sortie (3, 4) sont disposées, le corps (2) comprenant une gorge circulaire (7) sur une face extérieure, la gorge étant reliée par les premier et second canaux (11, 12) aux chambres d'entrée et de sortie (3, 4), lorsqu'il est utilisé, le corps (2) étant fixé dans une chambre (1) du circuit hydraulique (18) et la gorge circulaire (7) étant adjacente à une face de ladite chambre (1) constituant une paroi d'un espace inter-chambres (9).

2. Dispositif selon la revendication 1, **caractérisé en ce que** les chambres d'entrée et de sortie (3, 4) sont agencées sur une seule ligne.

3. Dispositif selon la revendication 1 ou 2, **caractérisé en ce que** l'espace inter-chambres (9) présente la forme d'une bague circulaire.

4. Dispositif selon les revendications 1 à 3, **caractérisé en ce que** plusieurs premiers et/ou seconds canaux (11, 12) sont agencés.

5. Dispositif selon la revendication 4, **caractérisé en ce que** les plusieurs premiers et/ou seconds canaux sont disposés dans des plans (13, 14, 15, 16) qui sont disposés perpendiculairement à l'axe central de la chambre d'entrée ou de sortie (3,4).

6. Dispositif selon la revendication 5, **caractérisé en ce que** les premiers et/ou seconds canaux (11, 12) sont agencés suivant des angles fixes les uns par rapport aux autres, également répartis sur un cercle.

7. Dispositif selon la revendication 5, **caractérisé en ce que** les premiers et/ou seconds canaux (11, 12) sont agencés dans des plans différents qui sont agencés parallèlement les uns aux autres.
